# EUROPEAN PATENT SPECIFICATION

(11) **EP 4 656 288 B1**
(45) Date of publication and mention of the grant of the patent: **18.11.2026**
(21) Application number: 24179443.7
(22) Date of filing: 31.05.2024
(51) Int. Cl.: B01J 23/06, B01J 23/74, B01J 23/755, B01J 23/80, B01J 37/34, C01F 5/24, C01F 11/18

(54) **A METHOD AND A SYSTEM FOR PRODUCING CARBONATE FROM CARBON DIOXIDE**
VERFAHREN UND SYSTEM ZUR HERSTELLUNG VON CARBONAT AUS KOHLENDIOXID
PROCÉDÉ ET SYSTÈME DE PRODUCTION DE CARBONATE À PARTIR DE DIOXYDE DE CARBONE

(43) Date of publication of application: 03.12.2025
(73) Proprietor: CCM Rights AS, 9257 Kokstad (NO)
(72) Inventor: El Amrani, Redaa Allah, Benguérir (MA); Ikovenko, Sergei, Boston, 02114 (US); Yatsunenko, Sergiy, 01-756 Warsaw (PL); Hagenes, Knut, 5357 Fjell (NO)
(74) Representative: Kancelaria Eupatent.pl Sp. z o.o.

(56) References cited:
- GB-A- 2 573 124
- US-B2- 9 476 136
- US-B2- 9 789 439
- KIERZKOWSKA-PAWLAK HANNA ET AL: "Catalytic activity of plasma-deposited Co3O4-based thin films for CO2 hydration - A new approach to carbon capture applications", APPLIED CATALYSIS B. ENVIRONMENTAL, ELSEVIER, AMSTERDAM, NL, vol. 304, 25 November 2021 (2021-11-25), XP086919185, ISSN: 0926-3373, [retrieved on 20211125], DOI: 10.1016/J.APCATB.2021.120961

## Description

### TECHNICAL FIELD

The present invention relates to production of carbonate from carbon dioxide through a catalytic hydration process.

### BACKGROUND

The increasing concentrations of carbon dioxide (CO₂) in the atmosphere present significant environmental challenges, prompting the development of technologies aimed at converting carbon dioxide into beneficial products. Among these efforts, the production of carbonates, particularly calcium carbonate, from carbon dioxide, presents a promising direction due to its wide applications in building materials and other sectors. Conventional methods for carbonate production suffer from several disadvantages, including low efficiency, high labour demands, and contamination of the final product with catalyst, such as nickel nanoparticles.

Existing technologies primarily involve the hydration of carbon dioxide to form carbonic acid, followed by a series of reactions to precipitate calcium carbonate. Despite certain efficiencies, these technologies require significant improvements to meet the demands for environmental sustainability and economic viability. The invention disclosed herein builds upon these existing methods while introducing a continuous process that not only enhances the reaction efficiency but also substantially reduces the contamination of the final product with catalyst. By incorporating advanced catalytic materials and employing electromagnetic waves to treat the reactants, this new method offers a groundbreaking approach to carbonate production. This innovation not only addresses the problem of carbon dioxide emissions impact on the environment but also opens new opportunities for the economically viable production of building materials, thereby significantly contributing to the circular economy.

A known method for hydrating carbon dioxide to produce calcium carbonate is disclosed in US9789439B2. It involves the following steps:
- causing interaction of carbon dioxide in the form of small bubbles with a fluid, such as water or an aqueous solution, leading to the formation of carbonic acid. This reaction of carbon dioxide with water takes place in the presence of a metal catalyst in the form of nickel nanoparticles;
- adding a solution of M²⁺ into the product of the reaction of carbon dioxide and water, wherein M is selected from Ca, Mg, or their mixtures;
- adding a NaOH solution and a CaCl₂ solution to the carbonic acid solution, resulting in the precipitation of CaCO₃ and the formation of a NaCl solution.

The aforementioned process is continuous, with the hydration of carbon dioxide occurring in the presence of a catalyst in the form of nickel nanoparticles. The process requires capturing the nickel nanoparticles at a certain stage and reusing them. This process is not only labour-intensive but also has a notable disadvantage: the presence of nickel nanoparticles in the final product (calcium carbonate), which negatively affects its quality.

### SUMMARY OF THE INVENTION

The solution as presented herein employs catalytic composites and electromagnetic treatment of reactants to increase the efficiency and purity of the produced carbonates, specifically calcium carbonate. This method effectively addresses and mitigates the drawbacks associated with existing technologies, including product contamination with catalyst and process inefficiency. As such, it offers a sustainable and economically viable approach to converting carbon dioxide into valuable carbonate materials.

The proposed solution pertains to the chemical industry, specifically to technologies for processing carbon dioxide through catalytic methods. It can be particularly applied to the production of construction materials directly from carbon dioxide in a continuous process.

The purpose of the technical solution proposed herein is to eliminate the drawbacks of the prior art processes and enhance the efficiency of the technological process. The enhancement is achieved through the utilization of a novel immobilized composite nickel-cobalt catalyst, along with new systems and new technological methods.

This is achieved by the proposed method of producing carbonates from carbon dioxide, which involves the following principal stages:
- the interaction of carbon dioxide in the form of small bubbles with a fluid, such as water or an aqueous solution, leads to the formation of carbonic acid. This reaction of carbon dioxide with water occurs in the presence of a metallic immobilized catalyst;
- a solution of alkali metal hydroxide (such as NaOH, KOH, LiOH etc.) and a solution of active calcium or magnesium compounds (for example CaCl₂, MgCl₂, CaO, MgO, Ca(OH)₂, Mg(OH)₂ etc.) are added to the solution of carbonic acid. This results in the formation of carbonates, accordingly calcium carbonate (CaCO₃) or magnesium carbonate (MgCO₃) and a solution of sodium chloride (NaCl) in the case of CaCl₂, MgCl₂ or the other by-products depending on reaction components. Embodiments described below will relate in detail to CaCl₂ and NaOH, but any of the above compounds can be used as well in an equivalent manner.

The process presented herein includes cooling the carbon dioxide prior to injecting it into the liquid, and injecting it into the liquid tank under pressure, while the liquid itself is subjected to electromagnetic waves treatment before use.

Additionally, for the intensification of carbon dioxide hydration, a two-layers nickel-cobalt composite is used as immobilized catalyst. This composite has two layers, with the upper layer having a developed surface in the form of dendrites, while the diameter of dendrite branches ranges from several tens of micrometres to several millimetres.

The two-layer composite can be manufactured using an electrolytic deposition method, where a sulfamate electrolyte is used for the electrolytic deposition of the composite in the first stage, and a sulphate electrolyte is used in the second stage.

The hydration tank is filled with a liquid such as water purified from impurities, previously exposed to electromagnetic waves with a frequency selected from the range of 40 - 160 GHz. Simultaneously, carbon dioxide, cooled to a temperature of 4 - 7°C, can be injected into the tank at high pressure in the range 0,4 - 0,8 MPa. The hydration process can take place in the presence of an immobilized catalyst made of a nickel-cobalt two-layer composite, resulting in the formation of carbonic acid.

In the carbonization tank, a NaOH solution and a CaCl₂ solution can be added to the carbonic acid solution. Calcium chloride (CaCl₂) is soluble in water due to its ionic nature and the strong attractive forces between the ions of the compound and water molecules. When calcium chloride is added to water, the compound dissociates into its constituent ions: calcium ions (Ca²⁺) and chloride ions (Cl⁻). That is why initially calcium ions are present in the aqueous solution of CaCl₂. The solution created in the tank can be subjected to ionization and simultaneously affected by ultrasonic waves. As a result of a sequence of technological operations and physical and mechanical effects, CaCO₃ and a NaCl solution form in the carbonization tank.

The present solution also proposes a system, in a form of a technological line, designed to implement the method described herein. The technological line comprises dedicated tanks and devices, as well as structural elements, and conduits for connecting these components and facilitating the execution of all phases of the technological cycle. The system comprises a carbon dioxide tank, a carbon dioxide cooler for cooling carbon dioxide supplied from the carbon dioxide tank, a first compressor for compressing the cooled carbon dioxide, and a liquid tank connected with an electromagnetic oscillations source for subjecting the liquid in the liquid tank to electromagnetic wave treatment. The system further comprises a hydration tank for receiving the electromagnetically treated liquid from the liquid tank, comprising nozzles for injecting the compressed and cooled carbon dioxide to the liquid in a form of bubbles, wherein the hydration tank comprises cellular structures of a two-layer composite nickel-cobalt immobilized catalyst, wherein the bottom layer of the composite immobilized catalyst has a developed surface in the form of metal agglomerates, and the upper layer has a developed surface in the form of dendrites. The system also comprises a carbonization tank connected with the hydration tank, an active calcium or magnesium compound tank, an alkali metal hydroxide solution tank, a carbonate tank and a by-product tank.

It is also noteworthy that the main working area of the nozzle for carbon dioxide bubbles injection is made of porous nickel.

The hydration tank for conducting chemical transformations can be designed as a reaction circuit with branches for water inlet and water solution outlet. The length and configuration of the circuit can be adjusted over time and capacity. Furthermore, at least four nozzles for injecting carbon dioxide bubbles into the liquid are positioned around the perimeter of the cylindrical surface, near the water inlet to the reaction circuit.

Additionally, the immobilized catalysts can be designed as cellular structures, for example, in the form of a mesh, the cells of which are partially filled with dendrites, which are also made of the composite.

The system may further comprise an automatic control system for ensuring the maintenance of optimal parameters for the technological process, such as the required temperature in the carbon dioxide cooling device, the necessary pressure at the nozzles' inlet for carbon dioxide bubbles injection, and at the reaction circuit's inlet in the hydration tank. It may also control the level of the signal emitted by the source of ultrasonic oscillations, the level of the signal emitted by the source of electromagnetic oscillation, and the ionizer's signal level in the carbonization tank.

The dendrites can be hemispherical can be positioned within the cells such as to form vortex flows of the liquid at the output of the cellular structure.

The nozzles for carbon dioxide bubbles injection may be configured to deliver carbon dioxide in the direction of the liquid flow and can be angled relative to the axis of the reactor. The cellular structures can be positioned perpendicular to the liquid flow or at a specific angle, periodically, throughout the hydration tank's length.

These and other features, aspects and advantages of the invention will become better understood with reference to the following drawings, descriptions and claims.

### BRIEF DESCRIPTION OF DRAWINGS

The present invention is shown by means of example embodiments in a drawing, wherein:
Fig. 1 shows a structural diagram of the system;
Fig. 2 shows a functional schematic of the system;
Figs. 3A-3C show formation of a two-layer composite;
Fig. 4 shows the two-layer composite on the mesh;
Fig. 5 shows a hydration tank with cellular structures.

### DETAILED DESCRIPTION

The following detailed description is of the best currently contemplated modes of carrying out the invention. The description is not to be taken in a limiting sense, but is made merely for the purpose of illustrating the general principles of the invention.

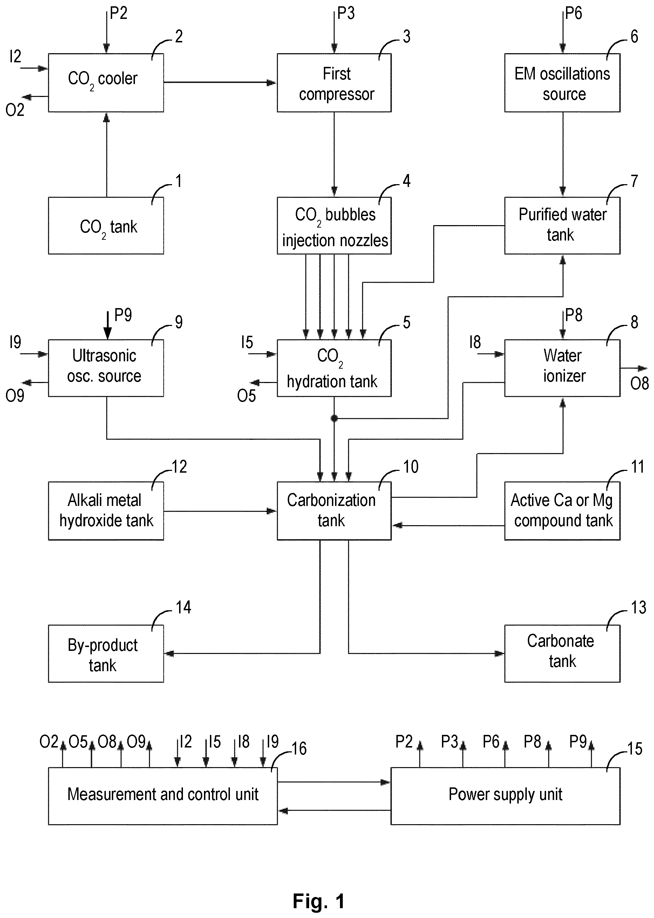

Fig. 1 presents a structural diagram of a system for carrying out the method for the mineralization of carbon dioxide to produce carbonate.

The system contains a hydration tank 5 connected with a carbonization tank 10. The hydration tank 5 is connected to sources of necessary components for performing the carbon dioxide hydration process, i.e. cooled carbon dioxide and water, through two channels. Carbon dioxide from a carbon dioxide tank 1 is cooled in a carbon dioxide cooler 2, then it is compressed in a compressor 3 and supplied to carbon dioxide bubbles injection nozzles 5. A purified water tank 7 provides water purified by an electromagnetic (EM) oscillations source 6, as will be explained below. In the hydration tank 5, carbon dioxide bubbles are input to the purified water by the injection nozzles 5. H₂CO₃ from the hydration tank 5 is input to the carbonization tank 10, wherein it is mixed, by means of ultrasonic oscillations from oscillations source 9, with ionized water supplied from a water ionizer 8, NaOH solution supplied from an alkali metal hydroxide solution tank 12 and CaCl₂ solution supplied from an active calcium or magnesium compound tank 11.

The water ionizer 8 is configured to automatically adjust pH, as will be explained below.

The power supply unit 15 provides primary power supply signals P2, P3, P6, P8, P9 to power respective units 2, 3, 7, 8, 9. The measurement and control unit 16 receives primary input measurement signals I2, I5, I8, I9 and provides primary output control signals O2, O5, O8, O9 to respective units 2, 5, 8 and 9, and it is further connected with the power supply unit 15. A feedback channel is also provided between the hydration tank 5 and the purified water tank 7.

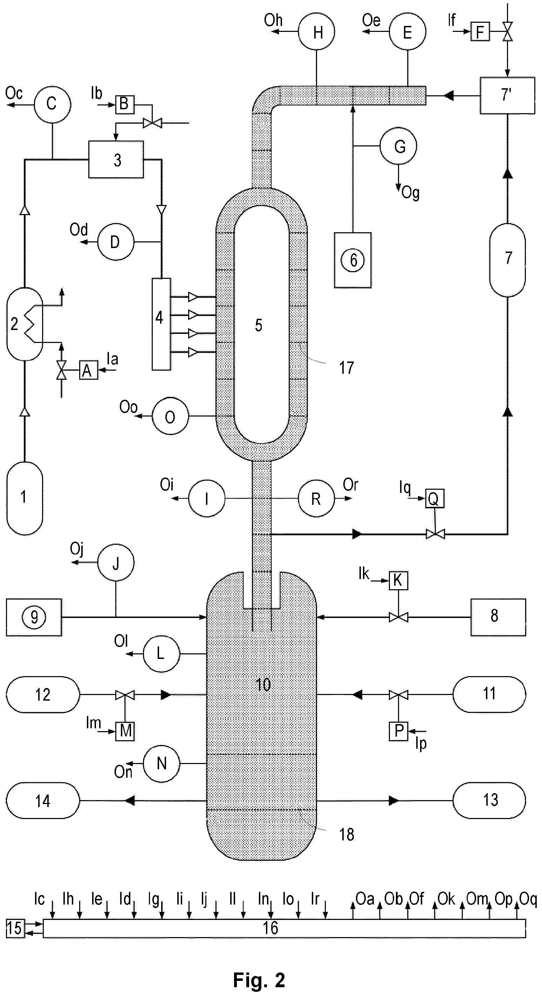

Fig. 2 illustrates a functional diagram of the system, in order to better explain its principles of operation, as provided below. In addition to the primary elements indicated by numeral references (1-18), Fig. 2 shows a number of secondary elements indicated by letter references (A-R). The designation "primary" and "secondary" is not meant to indicate significance of a referenced element, but rather the figure with which it is mostly associated.

The meters C, D, E, G, H, I, N, O, R are provided with remote data transmission functionality, which facilitates data transmission and reduces the amount of wiring throughout the system. The measurement and control unit 16 receives secondary input measurement signals Ic, Ih, Ie, Id, Ig, Ii, Ij, Il, In, Io, Ir from respective units C, H, E, D, G, I, J, L, N, O, R and provides primary output control signals Oa, Ob, Of, Ok, Om, Op, Oq to respective units A, B, F, K, M, P, Q.

Carbon dioxide flows from the carbon dioxide tank 1, through the carbon dioxide cooling device 2 and first compressor 3, to the nozzles for carbon dioxide bubble injection 4 directly to the hydration tank 5. Regulation of the temperature of carbon dioxide at the outlet of nozzles 4 is provided by the temperature meter C, temperature controller A that controls the rate of supply of refrigerant in the carbon dioxide cooling device 2, as well as measurement and control unit 16. Adjustment of carbon dioxide pressure at the outlet of the nozzles 4 is provided by a pressure meter D, compressor outlet pressure regulator B, and a measurement and control unit 16. The number of nozzles for injecting carbon dioxide bubbles is determined according to the volume of hydration tank 5.

Simultaneously, purified water is supplied to the hydration tank 5 through the second channel originating from the purified water tank 7, wherein the water has been previously treated with electromagnetic waves. A second compressor 7' installed within the purified water tank 7 regulates the water flow rate at the inlet to the hydration tank 5. This flow rate is synchronized with the reaction rates occurring in the carbonization tank 10.

The specific process of water supply to the hydration tank 5 is detailed as follows. Water flows from the purified water tank 7 to the inlet of a second compressor 7'. Flow regulation at the inlet of the hydration tank 5 is controlled by several components: a second pressure meter E, the compressor outlet pressure regulator F, and the measurement and control unit 16. Prior to entry into the hydration tank 5, water is treated with extremely high frequency (EHF) electromagnetic waves using the electromagnetic oscillation source 6. The output power level of this generator is monitored by a power meter G. The water flow's conductivity, crucial for controlling the degree of hydration, is measured at the hydration tank 5 inlet by the first water conductivity meter H, and at its outlet by a second water conductivity meter I. The collected data are transmitted to the measurement and control unit 16.

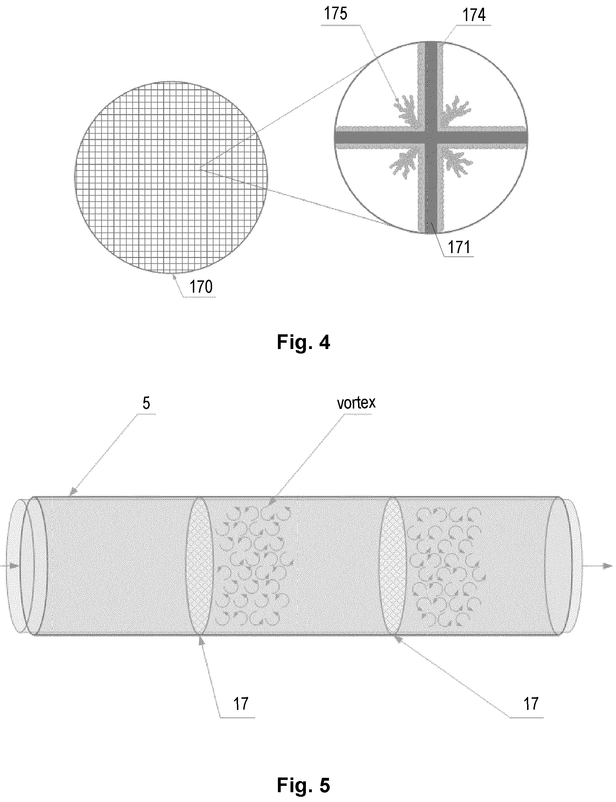

In the water inlet and outlet channels, as well as inside the hydration tank 5, an immobilized catalysts 17, formed by cellular structures in a form of a nickel-cobalt composite with dendrites are installed, such that the structures cover the entire cross-section of the channels and the tank, as shown in Fig. 5. The performance of the carbon dioxide hydration system is directly affected by the number of these cellular structures. A third pressure meter R is installed between the hydration tank 5 and the carbonization tank 10, and a feedback channel is connected to the purified water tank 7. The channel contains a pressure stabilizing regulator Q that allows adjustment of the solution of carbonic acid in water. If the pressure at the inlet of the carbonization tank 10 is exceeded, a portion of the aqueous carbonic acid solution may be returned from the channel connecting the hydration tank 5 and the carbonization tank 10 to the purified water tank 7.

The aqueous solution of carbonic acid flows from the outlet of tank 5 into the inlet of carbonization tank 10. Simultaneously, metered quantities of an aqueous solution of CaCl₂ from the tank 11 and an aqueous solution of NaOH from the tank 12 are introduced into the carbonization tank 10. The flow rates of the CaCl₂ and NaOH solutions are regulated by solution flow control devices: CaCl₂ solution supply regulator P and NaOH solution supply regulator M, in accordance with signals from the measurement and control unit 16. For continuous monitoring of the carbonization process through the generation of necessary control signals, the carbonization tank 10 is equipped with the third pressure meter R, a pH meter L, a temperature meter N, and a water ionizer 8 connected to the electrodes 18. A source of ultrasonic oscillations 9, which has an output power level control via a second power meter J, is also connected to carbonization tank 10.

The primary product of the described process, namely CaCO₃, is transferred from the carbonization tank 10 to the carbonate tank 13 using a specialized device not shown in the diagrams, while the NaCl₂ solution is moved to the by-product tank 14.

The currently described method for producing carbonates using carbon dioxide includes the use of immobilized catalysts 17 in the hydration tank 5 and ionizer electrodes 18 in the carbonization tank 10.

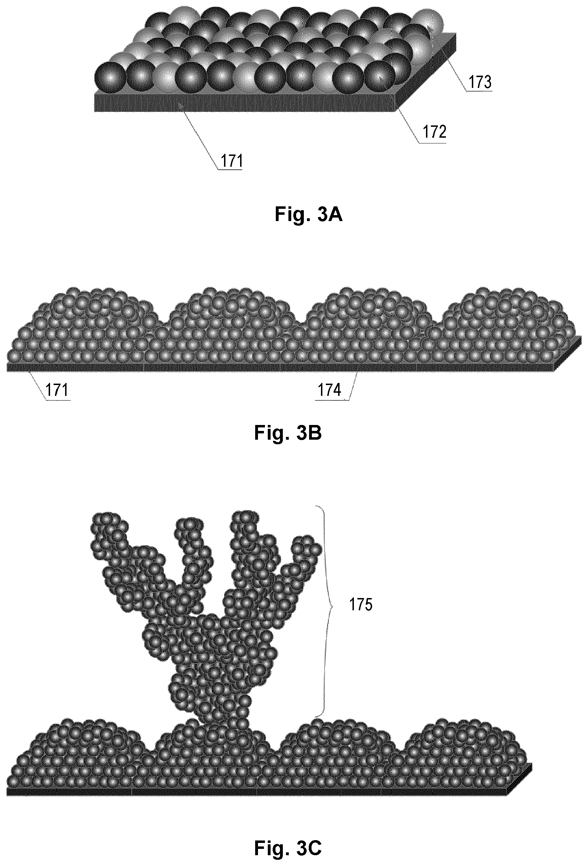

In this example embodiment, a two-layer nickel-cobalt composite, deposited on a cellular structure , for example a mesh-like structure 170 as shown in Fig. 4, made of corrosion-resistant AISI 316L stainless steel, serves as the immobilized catalyst 17. The cell size is chosen based on the two-layer nickel-cobalt composite coating and does not exceed the area of one cell, for example 100 mm². The deposition process of the nickel-cobalt composite occurs in two steps, illustrated in Figs. 3A-3C:
- a deposition of a first layer of agglomerates 174 (Fig. 3B) of two metals 172, 173 on a substrate 171 (Fig. 3a), up to 60 microns thick, is performed from a sulfamate electrolyte with the addition of cobalt sulfate at a temperature of 30-60°C, pH 2,5-4,2, and a current density of 3-7 A/dm²;
- a deposition of a second layer, up to 600 microns thick, occurs from a sulfate-chloride electrolyte with the addition of cobalt sulfate under conditions of temperature 20-40°C, pH 3-5,2 and current density 0,1-0,5 A/dm², which contributes to the formation of dendrites 175 that constitute a porous structure of the composite.

Ultrasonic oscillations and the use of reversing current during the deposition process significantly enhance the quality and adhesion of the nickel-cobalt layers. Experiments have demonstrated that to achieve an optimal structure of branched dendrites, it is necessary to control the current density, particularly near the diffusion current limit.

The second composite layer thus formed exhibits a porous structure with low density and high porosity. In both the first and second steps of electrolytic deposition, the electrolytes can be subjected to ultrasonic oscillations. The combined use of ultrasound and a reversing current mode for anode feeding significantly improves the quality of the nickel-cobalt deposits.

While the co-deposition modes of nickel and cobalt in an electrolytic bath with a sulfamate electrolyte supplemented with cobalt sulfate and two anodes, nickel and cobalt, the following was established. In continuous operation of the bath with separate power supply to the anodes, it was found that as the current density increases, the cathodic potential of nickel shifts more towards negative values, i.e., the polarization of nickel is more sharply expressed than that of cobalt. With a solution containing 3% Co relative to the total concentration of nickel and cobalt (taken as 100%), a composite with an equal content of both metals is obtained. At a Ni²⁺ to Co²⁺ ratio of 1:1, the nickel content in the alloy will be 5%. Increasing the ratio to 5:1 raises the nickel content to 40%. For example, to achieve an alloy ratio of 40% nickel and 60% cobalt, 40% of the total current must be passed only through the nickel anodes. By optimizing the anode areas and selecting the necessary current densities for each deposition channel, the nickel to cobalt ratio can range from 55-95% Ni to 45-5% Co. Considering that the effectiveness of dendrite growth is linked to a higher amount of nickel in the alloy, the most optimal range was selected as 85-95% Ni and 15-5% Co.

Thanks to the synergistic interaction of the immobilized catalyst made from the two-layer nickel-cobalt composite with a surface layer of branched dendrites, a more effective interaction with carbon dioxide molecules is achieved. This facilitates the acceleration of the hydration process, and the structural features of the composite, made in the form of a stainless steel mesh with a two-layer coating, ensure its high stability and durability.

One of the most important tasks in optimizing conditions ensuring the carbon dioxide hydration is obtaining necessary data about the parameters of the hydration process. In the case described herein, such parameters may include temperature, pressure during the injection of fine carbon dioxide bubbles, the flow rate of the aqueous solution, etc. However, an important aspect is to control the degree of carbon dioxide hydration in a tank made in the form of a reaction circuit with branches for water input and aqueous solution output. Specific and easily measurable parameters that can characterize the degree of carbon dioxide hydration in this case are temperature and the conductivity of water and the aqueous solution of carbonic acid.

It is known that the conductivity of water depends on the temperature at which measurement is taken and the presence of impurities. Ordinary non-distilled water is considered an excellent conductor of electricity due to the presence of ions. Hydrogen ions (H+) and hydroxide ions (OH⁻) can move freely in water and create a path for electric current. The conductivity of water can change with the addition of acids or bases due to the ionization of these substances in solution. Water itself is a weak electrolyte and contains a small amount of hydrogen (H+) and hydroxide (OH⁻) ions from the autoionization of water.

When acid is added to water, it dissociates into hydrogen ions (H⁺) and anions, which give electrical conductivity to the solution. The acid has a high concentration of hydrogen ions, which increases the conductivity of the water. The more acid added, the higher the conductivity of water is. In the present case, the conductivity of even ordinary water changes significantly when carbon dioxide dissolves in it, forming carbonic acid (H₂CO₃), which dissociates into hydrogen ions (H⁺) and bicarbonate ions (HCO₃⁻).Using dedicated units for controlling the temperature and conductivity of the water at the inlet of the hydration tank 5 and the aqueous carbonic acid solution at its outlet, the hydration process can be optimized through the automatic adjustment of the water feed rate, the pressure and volume of carbon dioxide injection and its temperature. It is evident that such a system can operate efficiently if the sensor for measuring the conductivity of the carbonic acid solution is calibrated in units that characterise the degree of hydration of the solution at the outlet of the tank. The reference conductivity value of the water at the inlet of the tank is also important because it serves as a reference value for comparing the conductivity of the aqueous solution at the outlet. This allows the efficiency of the hydration process to be determined and adjusted if necessary.

It should be noted that the ability to control the hydrogen index, as well as to adjust the rate of carbon dioxide bubbles injection and the water flow rate at the inlet to the hydration tank, ensures a stable and continuous carbon dioxide hydration process.

A more complex task involves synchronizing the processes of hydration and carbonization performed accordingly in the hydration tank 5 and the carbonization tank 10. These processes differ significantly from each other and, to ensure their synchronous operation in continuous mode, a feedback system is provided, which operates as follows. If a certain pressure at the entrance of carbonization tank 10 is exceeded, some of the carbonic acid solution from the channel between the hydration tank 5 and the carbonization tank 10 can be returned to the purified water tank 7, using a pressure meter R, a measurement and control unit 16, and a pressure stabilizing regulator Q in the carbonization tank 10.

It should be noted that the carbonization tank 10, in addition to the described functional capabilities, has specific design features adapted to optimize the process. An ultrasonic oscillation source 9 and electrodes 18 for ionizing the aqueous solution containing H₂CO₃, CaCl₂, and NaOH are integrated within the carbonization tank 10. These elements are an integral part of the design, ensuring effective interaction with the solution. The ionizer electrodes 18, made by electrolytic deposition of a nickel-cobalt composite, are galvanically isolated from each other and from the body of the carbonization tank 10. They are shaped as discs that precisely match the internal cross-section of the tank, maximizing the contact surface with the solution and facilitating uniform ionization. According to the description, the ionizer has direct and feedback connections with the measurement and control unit 16 and features pH adjustment, allowing the user of the system to adjust the desired level of stabilization for the necessary parameter, for example, a pH of 12,8. In cases where the alkaline solution with a pH of 12,8 contains ions and cations, the conductivity of the medium, despite its limitations, may be sufficient for short electrical impulses to effectively influence the ions and cations. This can stimulate their movement and accelerate the carbonization process, for example, by enhancing the diffusion of CO₂ to Ca(OH)₂ particles. The addition of energy through short electrical impulses can help molecules reach an activated state faster than would occur naturally. This is especially important in reactions where significant energy barriers must be overcome to initiate or continue the reaction.

The ionizer also has a display that shows the current pH value of the water and allows the user to easily manage this parameter. This result is achieved by controlling the intensity of the current, the duration of pulses, and their polarity, which in turn determines the ratio between H+ and OH⁻ ion concentrations in the aqueous solution.

In the carbonization tank 10, water is used as the primary solvent, where solutions of carbonic acid, calcium chloride, and sodium hydroxide are mixed. When dissolved, these components form an electrolytic solution containing Ca²⁺, Cl⁻, Na⁺, OH⁻, and HCO₃⁻ ions, which enhances the conductivity and ionic activity of the solution. Technological features and structural solutions of the carbonization tank 10 are specifically designed to enhance the ionization processes. The application of ultrasonic oscillations additionally accelerates water ionization and activates chemical components, significantly increasing the efficiency of the carbonization processes. This, in turn, leads to a higher rate of chemical reactions and improves the overall process results.

This technical solution not only optimizes the technological process but also ensures continuous control of the most important parameters of the production line, using a common measurement and control unit 16.

It should also be noted that understanding the kinetics of carbon dioxide hydration allows for the optimization of the technological process and chemical reactors. Knowledge of the dissolution rate and factors influencing the hydration process aids in the development of new carbonization technologies for carbon dioxide and more effective technical solutions related to the development of industrial production lines.

The kinetics of the dissolution process of carbon dioxide in water will be presented below in more detail. The dissolution process of carbon dioxide in water can be divided into several stages, each characterized by its own rate. When carbon dioxide comes into contact with water, carbonic acid is formed. This occurs in accordance with the chemical equation:

CO₂ + H₂O 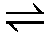 H₂CO₃ (1)

However, carbonic acid is quite unstable and easily breaks down into hydrogen ions (H+) and bicarbonate ions (HCO₃⁻):

H₂CO₃ 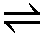 H⁺ + HCO₃⁻ (2)

Le Chatelier's principle is applicable to this system, as it is in equilibrium. This means that changes in reaction conditions, such as changes in pH, temperature, or concentration of reactants, will affect the equilibrium of the system and cause the reaction to shift in one direction or another.

In a low pH environment (acidic), an increase in the concentration of hydrogen ions (H+) shifts the reaction equilibrium to the left, preventing the formation of bicarbonate and carbonate ions. In such a case, carbon dioxide (CO₂) predominates in the solution.

At neutral pH, bicarbonate ions (HCO₃⁻) dominate over CO₂ and carbonate ions (CO₃²⁻) in equilibrium.

At a high pH environment (alkaline), a decrease in hydrogen ions (H+) concentration shifts the equilibrium of the reaction to the right, resulting in the predominance of carbonate ions (CO₃²⁻) over bicarbonates and CO₂.

There are two ionization stages in the carbonic acid system, each characterized by its ionization constant (Ka1 and Ka2). Both stages are in a state of equilibrium:

H₂CO₃ 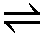 H⁺ + HCO₃⁻ (3)

HCO₃- 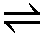 H⁺ + CO₃²⁻ (4)

The ionization constants (Ka1 and Ka2) are used to determine the degree of ionization in each of these stages. The final concentration of ions in the solution depends on the initial concentration of CO₂ and the pH of the solution. The reactions described in formulae 1, 2, 3, and 4 obey the laws of mass action, and their rates depend on various factors, including the pH of the solution, the concentration of the reactants, and the activity of the ions, which can be determined using ionization constants.

In these reactions, pH plays a crucial role because it affects the concentration of ions in the solution. High pH leads to the formation of more hydroxide ions, which can react with the formed ions, altering the equilibrium of the reactions of dissolution of CO₂ and formation of HCO₃⁻ and CO₃²⁻.

When calcium chloride is added to the solution, it results in the formation of Ca²⁺ cations and Cl⁻ anions. This does not directly affect pH, but it can impact ion exchange processes, which can in turn affect pH.

Adding sodium hydroxide will increase pH because NaOH dissociates into Na+ and OH⁻ ions. OH⁻ ions decrease the concentration of H+ ions, leading to an increase in pH.

All of the above means that changes in reaction conditions, such as pH, reactants concentrations, and ion activity, will be quite complex and possibly only if there is an ability to control at least one of the parameters and to have the capacity to influence it promptly.

Considering an example where the pH value of the solution is stabilized, for instance, at pH 12, the environment becomes strongly basic, indicating a high concentration of hydroxide ions (OH⁻) in the solution. Under such conditions, the reaction between carbon dioxide and hydroxide ions becomes significantly more substantial and may play a key role in regulating the pH of the solution.

The reaction occurs directly between dissolved carbon dioxide and hydroxide ions.

CO₂ + OH⁻ 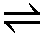 HCO₃⁻ (5)

In this process, CO₂ reacts with OH⁻ to form bicarbonate ions (HCO₃⁻). This significant chemical transformation helps to reduce the concentration of hydroxide ions in solution and stabilize pH. This is particularly important when it is necessary to reduce the basicity of the environment or to maintain an optimal pH for certain chemical processes.

In the method presented herein, the speed and efficiency of chemical processes related to carbonization are increased by ionizing the solutions and affecting them with ultrasonic oscillations during the stage of mixing CO₂, CaCl₂, and NaOH solutions in water in carbonization tank 10.

The source of ultrasonic oscillations and the ionizer for the aqueous solution are implemented directly in the carbonization tank 10, structurally integrated as an inherent part of the tank design. For ionizing aqueous solutions, galvanically isolated immobilized catalysts made of cell-structured electrodes, whose cells are partially filled with macroscopic dendrites, are used as electrodes. The electrodes (catalysts) are made from a nickel-cobalt composite and are connected to the ionizer 8. The ionizer consists of a power supply and a control unit, featuring a pH regulation function that allows the user to select the desired stabilization level of the necessary parameter, for example, pH - 12,8. The ionizer includes a display that shows the current pH value of the water, enabling the user to easily manage this parameter. This result is achieved by controlling the intensity of the current, the duration of the pulses, and their polarity, which in turn determines the balance between the concentrations of H⁺ and OH⁻ ions in the aqueous solution.

It is well-known that the primary factor determining the structure and properties of water is the hydrogen bonds between water molecules. Hydrogen bonds are formed between the hydrogen atoms and the oxygen atoms of different water molecules, creating clusters with a lattice structure, as described in a publication "The Structure and Properties of Water: Recent Studies of Irrelevance and Relevance to Biology" (by Martin Chaplin and Gerald H. Pollack, in Water (Basel). 2014; 6 (7): 1649-1674). It is also known that water molecules can form clusters around other molecules (for example, dissolved ions), creating so-called hydration shells. It should be noted that the hydration of ions, in turn, influences the structure, energy, and heat capacity of solutions, as described in a publication "Ion Hydration: The Key to Understanding Hydration Structure, Energy, and Heat Capacity" (by Stephen J. Riley, Victoria Buch, and Richard W. Davey, in Chemical Reviews, 2000, 100 (10), 3815-3866).

Substances dissolved in water can interact with water molecules through hydrogen bonds, in turn forming clusters and aggregates, as described in publication "The Structure and Properties of Water: Recent Studies of Irrelevance and Relevance to Biology" (by Martin Chaplin and Gerald H. Pollack, in Water (Basel). 2014; 6 (7): 1649-1674).

All these factors lead to changes in the physical and chemical properties of water, primarily affecting its role as a universal solvent.

Impurities in water can create additional interactions and compete for hydrogen bonds with carbon dioxide, which reduces its solubility. Therefore, maximizing the removal of impurities from water will help reduce competition for hydrogen bonds and increase the solubility of carbon dioxide.

Hydrogen bonds between water molecules form clusters of a reticulated structure. Declustering of water, i.e., breaking these clusters, will make more molecular surfaces available to form hydrogen bonds with carbon dioxide, which also helps to increase its solubility.

The technology described herein is characterized by the preparation of water for interaction with a large number of small carbon dioxide bubbles, which are injected after cooling and under pressure. Water molecules have a large dipole moment, which causes them to interact with each other in the liquid state to form bound structures. Considering that water is a cluster system, that is, it is a deeply associated liquid, its properties are similar to those of polymers, which have high fluidity. Water clusters at the phase boundaries (liquid-air) are arranged in a certain order, with all clusters oscillating with the same frequency, acquiring a common frequency. Given the movement of these clusters and considering that the molecules within the cluster are polar, i.e., have a large dipole moment, the emergence of electromagnetic radiation can be expected. This radiation differs from the radiation of free dipoles, since the dipoles are bound and oscillate together in a clustered structure, as described in a publication "Dynamics of parameters of water systems under the action of weak electromagnetic radiation" By Barabash YM. in Nauka, 285 pp). The frequency of oscillation of the water clusters and, accordingly, the frequency of electromagnetic oscillations can be determined by the following formulas: $ω = 2 πf = \sqrt{\frac{α}{M}}$ (6) $M = ρV$ (7) wherein:
α - surface tension of water at a given temperature;
M is the mass of the cluster;
V is the volume of the cluster.

The volume of the cluster is calculated considering the dimensions of the fractal closed structure of the cluster. At room temperature of 18°C, the frequency of cluster oscillations f equals 6.79-109 Hz, implying that the wavelength in free space should be λ = 14.18 mm.

Since water is a self-organized structure containing both elements ordered into clusters and free molecules, it is believed that the following will occur under the influence of external electromagnetic radiation. When water molecules approach each other (distance changes from R0 to R1), the interaction energy increases compared to when they are further apart (distance changes from R0 to R2). However, due to the significant dipole moment of water molecules, in the presence of an external electromagnetic field, they will perform oscillatory movements (for instance, from R1 to R2). This dependency means that the applied electromagnetic field will more significantly promote the attraction of molecules, thereby enhancing the organization of the system as a whole, i.e., leading to the formation of a hexagonal structure.

The self-organized structure of water does not move as a single entity when exposed to EHF radiation, but each element of the hexagonal or - in the presence of impurities - other type of structure is displaced, resulting in a distortion of the structure's geometry and the creation of stresses. This property of water makes it similar to polymers. However, polymeric structures have long relaxation times, which are not seconds, but minutes or longer. Therefore, the energy of the electromagnetic radiation's quanta, when converted into the internal energy of the organized water structure as a result of its distortions, will accumulate until it reaches the energy of the hydrogen bond, which is 500 to 1000 times greater than the energy of the electromagnetic field. When this threshold is reached, the hydrogen bond breaks, and the structure is disrupted.
This can be compared to a snow avalanche, where there is a gradual, slow accumulation of mass followed by a rapid collapse. Similarly, in the case of water, not only weak bonds between clusters are broken, but also stronger ones. As a result of these breaks, H+ and OH- ions and the hydrated electron e- can be formed. The blue colour of pure water is attributed to the presence of these electrons, not merely to natural light scattering. Researchers have experimentally discovered the emission from hydrated electrons in distilled water for the first time. However, this effect is not observed in water containing impurities. This is explained by the fact that in such cases, hydrated electrons participate in chemical reactions.

Thus, when exposed to electromagnetic radiation, energy accumulates in the water's cluster structure up to a certain critical value. Subsequently, there is a rupture of bonds both between clusters and others, leading to an avalanche-like release of energy, which can then be transformed into other types.

It should be noted that the properties of water as a solvent change significantly after exposure to EHF electromagnetic waves at the resonant frequencies of water, e.g., 42.2 GHz, 50.3 GHz, 60.1 GHz, 65 GHz, 100 GHz, 130 GHz, and 150 GHz. The source indicated in footnote 5 revealed significant findings obtained in the investigation of the radio transparency resonance spectrum of an aqueous medium in the range of 18 - 160 GHz using direct radio imaging.

While the invention has been described with respect to a limited number of embodiments, it will be appreciated that many variations, modifications and other applications of the invention may be made. Therefore, the claimed invention as recited in the claims that follow is not limited to the embodiments described herein.

### LIST OF REFERENCES

- 1: carbon dioxide tank
- 2: carbon dioxide cooler
- 3: first compressor
- 4: carbon dioxide bubbles injection nozzles
- 5: hydration tank
- 6: electromagnetic oscillations source
- 7: purified water tank
- 7': second compressor
- 8: water ionizer
- 9: ultrasonic oscillations source
- 10: carbonization tank
- 11: active calcium or magnesium compound tank
- 12: alkali metal hydroxide solution tank
- 13: carbonate tank
- 14: by-product tank
- 15: power supply
- 16: measurement and control unit
- 17: immobilized catalyst
- 18: ionizer electrodes
- A: temperature controller in the carbon dioxide cooler 2
- B: outlet pressure regulator of the first compressor 3
- C: first temperature meter with remote data transmission
- D: first pressure meter with remote data transmission
- E: second pressure meter with remote data transmission
- F: second pressure regulator of outlet of the second compressor 7'
- G: first power meter with remote data transmission
- H: first water conductivity meter with remote data transmission
- I: second water conductivity meter with remote data transmission
- J: second power meter
- K: water solution ionization rate controller
- L: pH meter
- M: supply regulator of the NaOH solution
- N: second temperature meter with remote data transmission
- O: third temperature meter with remote data transmission
- P: supply regulator of the active calcium or magnesium solution
- Q: regulator for stabilizing pressure between the hydration tank 5 and the carbonization tank 10
- R: third pressure meter with remote data transmission

## Claims

1. A method for producing carbonates using carbon dioxide, comprising the steps of:
- in a hydration tank (5), injecting carbon dioxide, in a form of fine bubbles, into a liquid containing a metallic catalyst to form carbonic acid; and
- in a carbonization tank (10), adding a solution of alkali metal hydroxide and an active calcium or magnesium compound to the carbonic acid to form calcium or magnesium carbonate;
**characterized by**:
- cooling the carbon dioxide to be injected to the hydration tank (5);
- subjecting the liquid supplied to the hydration tank (5) to electromagnetic wave treatment; and
- injecting the cooled carbon dioxide into the hydration tank (5) under pressure;
- wherein the metallic catalyst in the hydration tank (5) is a two-layer composite immobilized nickel-cobalt catalyst (17), wherein the bottom layer of the composite catalyst has a developed surface in the form of metal agglomerates (174), and the upper layer has a developed surface in the form of dendrites (175).

2. The method according to claim 1, wherein the two-layer composite is formed by electrolytic deposition.

3. The method according to any of previous claims, wherein the two-layer composite is formed in two stages, wherein in the first stage, a sulfamate electrolyte is used for the electrolytic deposition of the composite, and in the second stage, a sulphate electrolyte is used for the electrolytic deposition of the composite.
3. The method according to any of previous claims, wherein the upper layer of the two-layer composite has a porous structure with low density and high porosity.

4. The method according to any of previous claims, comprising cooling the carbon dioxide to a temperature between 4 and 7°C before injection thereof to the liquid.

5. The method according to any of previous claims, comprising injecting the carbon dioxide at pressure between 0,4 and 0,8 MPa into the liquid.

6. The method according to any of previous claims, comprising subjecting the liquid to electromagnetic wave treatment at a frequency selected from a range between 40 and 160 GHz.

7. The method according to any of previous claims, further comprising applying ultrasonic wave treatment to the solutions in the carbonization tank (10).

8. The method according to any of previous claims, performed as a continuous process.

9. The method according to any of previous claims, wherein the liquid is water or an aqueous solution.

10. The method according to any of previous claims, wherein the two-layer composite nickel-cobalt catalyst has a quasi-uniform or uniform mix of nickel and cobalt atoms.

11. A system for producing carbonates, the system comprising:
- a carbon dioxide tank (1);
- a carbon dioxide cooler (2) for cooling carbon dioxide supplied from the carbon dioxide tank (1);
- a first compressor (3) for compressing the cooled carbon dioxide;
- a liquid tank (7) connected with an electromagnetic oscillations source (6) for subjecting the liquid in the liquid tank (7) to electromagnetic wave treatment;
- a hydration tank (5) for receiving the electromagnetically treated liquid from the liquid tank (7), comprising nozzles (4) for injecting the compressed and cooled carbon dioxide to the liquid in a form of bubbles;
- wherein the hydration tank (5) comprises a two-layer composite immobilized nickel-cobalt catalyst (17), wherein the bottom layer of the composite catalyst has a developed surface in the form of metal agglomerates (174), and the upper layer has a developed surface in the form of dendrites (175); and
- a carbonization tank (10) connected with the hydration tank (5), an active calcium or magnesium compound tank (11), an alkali metal hydroxide solution tank (12), a carbonate tank (13) and a by-product tank (14).

12. The system according to claim 11, further comprising an automatic measurement and control unit (16) configured to maintain optimal parameters of the process.

13. The system according to any of claims from 11 to 12, wherein the hydration tank (5) comprises the immobilized catalyst (17) formed by cellular structures in a shape of meshes positioned transversely to the direction of liquid flow through the hydration tank (5) and configured to create vortexes in the flow of the liquid.

14. The system according to any of claims from 11 to 12, wherein the nozzles (4) are configured to inject carbon dioxide bubbles in a direction of the liquid flow through the hydration tank (5) and are angled relative to the liquid flow.

15. The system according to claim 14, wherein the nozzle (4) outlet that is in contact with carbon dioxide is made of porous nickel.

## Patentansprüche

1. Verfahren zur Herstellung von Carbonaten unter Verwendung von Kohlendioxid, umfassend die Schritte:
- in einem Hydratationsbehälter (5) Einspritzen von Kohlendioxid, in Form von feinen Blasen, in eine einen metallischen Katalysator enthaltende Flüssigkeit, um Kohlensäure zu bilden; und
- in einem Carbonatisierungsbehälter (10) Zugeben einer Lösung von Alkalimetallhydroxid und einer aktiven Calcium- oder Magnesiumverbindung zu der Kohlensäure, um Calcium- oder Magnesiumcarbonat zu bilden;
**gekennzeichnet durch**:
- Kühlen des in den Hydratationsbehälter (5) einzuspritzenden Kohlendioxids;
- Unterziehen der dem Hydratationsbehälter (5) zugeführten Flüssigkeit einer Behandlung mit elektromagnetischen Wellen; und
- Einspritzen des gekühlten Kohlendioxids unter Druck in den Hydratationsbehälter (5);
- wobei der metallische Katalysator in dem Hydratationsbehälter (5) ein zweischichtiger immobilisierter Nickel-Cobalt-Verbundkatalysator (17) ist, wobei die untere Schicht des Verbundkatalysators eine entwickelte Oberfläche in Form von Metallagglomeraten (174) aufweist, und die obere Schicht eine entwickelte Oberfläche in Form von Dendriten (175) aufweist.

2. Verfahren nach Anspruch 1, wobei der zweischichtige Verbundwerkstoff durch elektrolytische Abscheidung gebildet wird.

3. Verfahren nach einem der vorhergehenden Ansprüche, wobei der zweischichtige Verbundwerkstoff in zwei Stufen gebildet wird, wobei in der ersten Stufe ein Sulfamatelektrolyt für die elektrolytische Abscheidung des Verbundwerkstoffs verwendet wird, und in der zweiten Stufe ein Sulfatelektrolyt für die elektrolytische Abscheidung des Verbundwerkstoffs verwendet wird.
3. Verfahren nach einem der vorhergehenden Ansprüche, wobei die obere Schicht des zweischichtigen Verbundwerkstoffs eine poröse Struktur mit geringer Dichte und hoher Porosität aufweist.

4. Verfahren nach einem der vorhergehenden Ansprüche, umfassend das Kühlen des Kohlendioxids auf eine Temperatur zwischen 4 und 7 °C vor dessen Einspritzen in die Flüssigkeit.

5. Verfahren nach einem der vorhergehenden Ansprüche, umfassend das Einspritzen des Kohlendioxids bei einem Druck zwischen 0,4 und 0,8 MPa in die Flüssigkeit.

6. Verfahren nach einem der vorhergehenden Ansprüche, umfassend das Unterziehen der Flüssigkeit einer Behandlung mit elektromagnetischen Wellen bei einer Frequenz, die aus einem Bereich zwischen 40 und 160 GHz ausgewählt ist.

7. Verfahren nach einem der vorhergehenden Ansprüche, ferner umfassend das Anwenden einer Behandlung mit Ultraschallwellen auf die Lösungen in dem Carbonatisierungsbehälter (10).

8. Verfahren nach einem der vorhergehenden Ansprüche, das als kontinuierlicher Prozess durchgeführt wird.

9. Verfahren nach einem der vorhergehenden Ansprüche, wobei die Flüssigkeit Wasser oder eine wässrige Lösung ist.

10. Verfahren nach einem der vorhergehenden Ansprüche, wobei der zweischichtige Nickel-Cobalt-Verbundkatalysator eine quasi-gleichmäßige oder gleichmäßige Mischung von Nickel- und Cobaltatomen aufweist.

11. System zur Herstellung von Carbonaten, wobei das System Folgendes umfasst:
- einen Kohlendioxidbehälter (1);
- einen Kohlendioxidkühler (2) zum Kühlen von Kohlendioxid, das aus dem Kohlendioxidbehälter (1) zugeführt wird;
- einen ersten Verdichter (3) zum Verdichten des gekühlten Kohlendioxids;
- einen Flüssigkeitsbehälter (7), der mit einer Quelle elektromagnetischer Schwingungen (6) verbunden ist, um die Flüssigkeit in dem Flüssigkeitsbehälter (7) einer Behandlung mit elektromagnetischen Wellen zu unterziehen;
- einen Hydratationsbehälter (5) zum Aufnehmen der elektromagnetisch behandelten Flüssigkeit aus dem Flüssigkeitsbehälter (7), umfassend Düsen (4) zum Einspritzen des verdichteten und gekühlten Kohlendioxids in Form von Blasen in die Flüssigkeit;
- wobei der Hydratationsbehälter (5) einen zweischichtigen immobilisierten Nickel-Cobalt-Verbundkatalysator (17) umfasst, wobei die untere Schicht des Verbundkatalysators eine entwickelte Oberfläche in Form von Metallagglomeraten (174) aufweist, und die obere Schicht eine entwickelte Oberfläche in Form von Dendriten (175) aufweist; und
- einen Carbonatisierungsbehälter (10), der mit dem Hydratationsbehälter (5) verbunden ist, einen Behälter (11) für eine aktive Calcium- oder Magnesiumverbindung, einen Behälter (12) für eine Alkalimetallhydroxidlösung, einen Carbonatbehälter (13) und einen Nebenproduktbehälter (14).

12. System nach Anspruch 11, ferner umfassend eine automatische Mess- und Steuereinheit (16), die dazu konfiguriert ist, optimale Parameter des Prozesses aufrechtzuerhalten.

13. System nach einem der Ansprüche 11 bis 12, wobei der Hydratationsbehälter (5) den immobilisierten Katalysator (17) umfasst, der durch zellulare Strukturen in Gestalt von Netzen gebildet ist, die quer zur Richtung der Flüssigkeitsströmung durch den Hydratationsbehälter (5) angeordnet und dazu konfiguriert sind, Wirbel in der Strömung der Flüssigkeit zu erzeugen.

14. System nach einem der Ansprüche 11 bis 12, wobei die Düsen (4) dazu konfiguriert sind, Kohlendioxidblasen in einer Richtung der Flüssigkeitsströmung durch den Hydratationsbehälter (5) einzuspritzen, und relativ zu der Flüssigkeitsströmung angewinkelt sind.

15. System nach Anspruch 14, wobei der Auslass der Düse (4), der mit Kohlendioxid in Kontakt steht, aus porösem Nickel hergestellt ist.

## Revendications

1. Procédé de production de carbonates au moyen de dioxyde de carbone, comprenant les étapes consistant à :
- dans un réservoir d'hydratation (5), injecter du dioxyde de carbone, sous forme de fines bulles, dans un liquide contenant un catalyseur métallique pour former de l'acide carbonique ; et,
- dans un réservoir de carbonatation (10), ajouter une solution d'hydroxyde de métal alcalin et un composé actif de calcium ou de magnésium à l'acide carbonique pour former du carbonate de calcium ou de magnésium ;
**caractérisé par** :
- le refroidissement du dioxyde de carbone à injecter dans le réservoir d'hydratation (5) ;
- le traitement par ondes électromagnétiques du liquide fourni au réservoir d'hydratation (5) ; et
- l'injection sous pression du dioxyde de carbone refroidi dans le réservoir d'hydratation (5) ;
- dans lequel le catalyseur métallique dans le réservoir d'hydratation (5) est un catalyseur nickel-cobalt immobilisé composite à deux couches (17), dans lequel la couche inférieure du catalyseur composite présente une surface développée sous forme d'agglomérats métalliques (174), et la couche supérieure présente une surface développée sous forme de dendrites (175).

2. Procédé selon la revendication 1, dans lequel le composite à deux couches est formé par dépôt électrolytique.

3. Procédé selon l'une quelconque des revendications précédentes, dans lequel le composite à deux couches est formé en deux stades, dans lequel, au premier stade, un électrolyte au sulfamate est utilisé pour le dépôt électrolytique du composite, et, au second stade, un électrolyte au sulfate est utilisé pour le dépôt électrolytique du composite.
3. Procédé selon l'une quelconque des revendications précédentes, dans lequel la couche supérieure du composite à deux couches présente une structure poreuse à faible densité et à porosité élevée.

4. Procédé selon l'une quelconque des revendications précédentes, comprenant le refroidissement du dioxyde de carbone à une température comprise entre 4 et 7 °C avant son injection dans le liquide.

5. Procédé selon l'une quelconque des revendications précédentes, comprenant l'injection du dioxyde de carbone dans le liquide, à une pression comprise entre 0,4 et 0,8 MPa.

6. Procédé selon l'une quelconque des revendications précédentes, comprenant le traitement du liquide par ondes électromagnétiques à une fréquence choisie dans une plage comprise entre 40 et 160 GHz.

7. Procédé selon l'une quelconque des revendications précédentes, comprenant en outre l'application d'un traitement par ondes ultrasonores aux solutions dans le réservoir de carbonatation (10).

8. Procédé selon l'une quelconque des revendications précédentes, mis en œuvre en tant que processus continu.

9. Procédé selon l'une quelconque des revendications précédentes, dans lequel le liquide est de l'eau ou une solution aqueuse.

10. Procédé selon l'une quelconque des revendications précédentes, dans lequel le catalyseur nickel-cobalt composite à deux couches présente un mélange quasi uniforme ou uniforme d'atomes de nickel et de cobalt.

11. Système de production de carbonates, le système comprenant :
- un réservoir de dioxyde de carbone (1) ;
- un refroidisseur de dioxyde de carbone (2) pour refroidir le dioxyde de carbone fourni par le réservoir de dioxyde de carbone (1) ;
- un premier compresseur (3) pour comprimer le dioxyde de carbone refroidi ;
- un réservoir de liquide (7) relié à une source d'oscillations électromagnétiques (6) pour soumettre le liquide dans le réservoir de liquide (7) à un traitement par ondes électromagnétiques ;
- un réservoir d'hydratation (5) pour recevoir le liquide traité électromagnétiquement provenant du réservoir de liquide (7), comprenant des buses (4) pour injecter le dioxyde de carbone comprimé et refroidi dans le liquide sous forme de bulles ;
- dans lequel le réservoir d'hydratation (5) comprend un catalyseur nickel-cobalt immobilisé composite à deux couches (17), dans lequel la couche inférieure du catalyseur composite présente une surface développée sous forme d'agglomérats métalliques (174), et la couche supérieure présente une surface développée sous forme de dendrites (175) ; et
- un réservoir de carbonatation (10) relié au réservoir d'hydratation (5), un réservoir de composé actif de calcium ou de magnésium (11), un réservoir de solution d'hydroxyde de métal alcalin (12), un réservoir de carbonate (13) et un réservoir de sous-produit (14).

12. Système selon la revendication 11, comprenant en outre une unité automatique de mesure et de commande (16) configurée pour maintenir des paramètres optimaux du processus.

13. Système selon l'une quelconque des revendications 11 à 12, dans lequel le réservoir d'hydratation (5) comprend le catalyseur immobilisé (17) formé par des structures cellulaires en forme de treillis positionnées transversalement à la direction de l'écoulement du liquide à travers le réservoir d'hydratation (5) et configurées pour créer des tourbillons dans l'écoulement du liquide.

14. Système selon l'une quelconque des revendications 11 à 12, dans lequel les buses (4) sont configurées pour injecter des bulles de dioxyde de carbone dans une direction de l'écoulement du liquide à travers le réservoir d'hydratation (5) et sont inclinées par rapport à l'écoulement du liquide.

15. Système selon la revendication 14, dans lequel la sortie de la buse (4) qui est en contact avec le dioxyde de carbone est en nickel poreux.
